# FASCICULE DE BREVET EUROPEEN

(11) **EP 0 696 778 B1**
(45) Date de publication et mention de la délivrance du brevet: **26.03.1997**
(21) Numéro de dépôt: 95470029.0
(22) Date de dépôt: 25.07.1995
(51) Int. Cl.: G06K 19/04, G06K 7/08, G06K 19/077

(54) **Etiquette électronique et système pour l'identification sans contact d'objets, notamment d'objets métalliques**
Elektronisches Etikett und Vorrichtung zur kontaktlosen Identifizierung von Objekten, insbesondere von metallischen Objekten
Electronic tag and contactless object identification system, particularly for metal objects

(30) Priorité: 10.08.1994 FR 9410027
(43) Date de publication de la demande: 14.02.1996
(73) Titulaire: GEMPLUS S.C.A., F-13420 Gemenos (FR)
(72) Inventeur: Serra, Didier, Cabinet Ballot-Schmit, F-57000 Metz (FR)
(74) Mandataire: Schmit, Christian Norbert Marie

(56) Documents cités:
- EP-A- 0 344 490
- EP-A- 0 376 062
- EP-A- 0 586 083
- WO-A-93/13494
- GB-A- 2 077 555
- US-A- 4 782 342

## Description

La présente invention concerne une étiquette électronique et un système pour l'identification sans contact d'objets, notamment d'objets métalliques, tels que par exemple des bouteilles de gaz.

Il est connu, pour repérer et identifier de tels objets, d'apposer sur ceux-ci des étiquettes électroniques. Une telle étiquette est munie d'un dispositif de réception et d'émission d'ondes électromagnétiques couplé avec un module électronique permettant de traiter des signaux reçus et d'en réemettre d'autres, comportant notamment un message d'identification de l'étiquette, et donc de l'objet sur lequel elle est apposée. Par ailleurs, le système comporte un lecteur comprenant un dispositif d'émission/réception d'ondes électromagnétiques pour transmettre des informations entre un terminal de données et la dite étiquette électronique.

Le lecteur remplit plusieurs fonctions et notamment sert à
- transmettre à l'étiquette l'énergie nécessaire à son fonctionnement, l'étiquette étant dépourvue de source d'énergie autonome spécifique,
- transmettre à l'étiquette des données provenant du terminal, ces données étant éventuellement inscriptibles dans une mémoire dont l'étiquette est pourvue,
- recevoir des données provenant de l'étiquette et spécifiques à celle-ci, notamment en vue de son identification.

Pour effectuer ces diverses transmissions, le dispositif d'émission-réception du lecteur comporte une antenne par exemple constituée d'une bobine avec un noyau de ferrite, qui sert pour l'émission et pour la réception.

L'étiquette comporte également une antenne de réception des ondes électromagnétiques émises par le lecteur, la même antenne servant également pour l'émission de données vers le lecteur. En réception, l'antenne constitue un moyen de réception par induction de l'énergie provenant du lecteur, ainsi qu'un moyen de réception des données émises par celui-ci. L'antenne est reliée à un circuit électronique, par exemple une "puce" électronique, comportant des moyens nécessaires à la démodulation des signaux reçus par l'antenne, à leur décodage et à leur mémorisation, ainsi qu'au codage et à la modulation de signaux à retransmettre.

Un problème majeur de ces systèmes et de permettre à l'étiquette de recevoir l'énergie nécessaire à son fonctionnement avec un rendement maximum, de manière à pouvoir réduire la puissance du rayonnement électromagnétique émis par le lecteur et à limiter l'encombrement des antennes, et à permettre une transmission de l'énergie et des signaux sans être soumis à une distance de transmission excessivement courte.

Pour tenter de résoudre ce problème, il a déjà été proposé de réaliser une antenne d'étiquette de type pot de ferrite, formée d'une pièce en ferrite de forme cylindrique comportant sur une de ses faces planes une rainure annulaire dans laquelle est logé un bobinage. Une telle antenne est nécessairement fixée sur l'objet à identifier avec son axe perpendiculaire à la surface de l'objet, et du fait de la hauteur relativement importante du pot de ferrite, présente dans la direction axiale un encombrement gênant. Pour y remédier, il est connu d'encastrer l'étiquette à la surface de l'objet. Par exemple, il est connu de placer des étiquettes de ce type dans un logement creusé dans le bouton du robinet de bouteilles de gaz. De ce fait, l'antenne est nécessairement de petites dimensions.

L'antenne du lecteur est réalisée de manière similaire par une bobine dont l'axe doit être placé sensiblement dans la direction de l'axe de l'antenne de l'étiquette pour assurer la meilleure transmission d'énergie possible. Pour augmenter le rendement, la solution qui consisterait à augmenter la dimension diamétrale de l'antenne de l'étiquette pour capter plus de lignes du flux émis par le lecteur est pratiquement irréalisable pour des raisons d'encombrement. Il s'est ainsi avéré que la distance entre lecteur et étiquette ne peut guère excéder 5 mm avec un tel système.

Une autre solution envisagée est de réaliser l'antenne de l'étiquette sous la forme d'un bobinage entourant un bâtonnet de ferrite allongé, par exemple de 15 mm de long pour un diamètre de 3 mm.

Pour que les lignes de flux du champ magnétique passent dans le bâtonnet de ferrite selon la direction axiale du bobinage, celle-ci doit être sensiblement parallèle à la surface de l'objet sur lequel l'étiquette est apposée. Un premier inconvénient de cette disposition est que, pour permettre la transmission d'énergie et de données entre un lecteur de type ci-dessus et l'étiquette, l'antenne du lecteur doit être orientée de manière à avoir son axe dirigé sensiblement selon la direction axiale du bobinage de l'antenne de l'étiquette. Il en résulte une impossibilité de lire l'étiquette de manière sûre sans veiller à l'orientation relative de celle-ci par rapport au lecteur. De plus, il est nécessaire de placer l'étiquette dans un endroit où elle est protégée mécaniquement. Dans le cas de bouteilles de gaz, ceci est réalisé en plaçant l'étiquette à proximité du robinet, à l'intérieur de la tulipe de protection de celui-ci et dans un plan sensiblement perpendiculaire à l'axe de la bouteille. Pour assurer une bonne transmission de l'énergie entre le lecteur et l'antenne de l'étiquette, il faudrait placer l'antenne du lecteur en alignement axial avec celle de l'étiquette, ce qui est pratiquement impossible à l'intérieur de la tulipe pour des raisons d'encombrement, et si le lecteur est placé à l'extérieur de la tulipe, celle-ci forme un écran qui perturbe fortement la transmission.

En conséquence, bien que les étiquettes à antenne de type bâtonnet de ferrite présentent certains avantages, notamment sur le plan de l'encombrement, leur lecture par un lecteur muni d'une antenne classique n'est pas réalisable de manière sûre et aisée lorsqu'elles sont placées sur de nombreux objets, et notamment des bouteilles de gaz.

Afin de remédier aux problèmes ci-dessus et de permettre une identification sûre d'objets pourvus d'étiquettes électroniques, tout en limitant les contraintes de lecture de ces étiquettes, l'inventeur a déjà développé une solution décrite dans EP-A-0 662 666 consistant à utiliser:
- une étiquette comprenant un bobinage ayant un axe, et
- un lecteur comportant un ou plusieurs dispositifs d'émission-réception, décalés angulairement autour d'un axe médian, chaque dispositif d'émission-réception du lecteur comprenant deux barreaux sensiblement parallèles sur lesquels sont respectivement enroulées deux bobines ayant des extrémités respectives situées sensiblement dans un même plan et constituant deux pôles sensiblement parallèles et situés dans le dit plan, sensiblement perpendiculaire aux dits axes, dans une configuration telle que le champ généré soit de sens opposé dans les deux barreaux, de façon à ce qu'au moins une partie des lignes du dit champ magnétique puisse se boucler dans le circuit magnétique en passant dans le bobinage de l'étiquette selon la direction de l'axe du dit bobinage lorsque le lecteur est placé à proximité de la dite étiquette.

Ce système présente l'avantage que les deux bobines étant bobinées de manière à créer un flux magnétique de l'une vers l'autre en passant par la bobine de l'étiquette, la puissance transmise et la sensibilité de réception sont pratiquement doublées.

Grâce à ce système, il est possible de lire de manière fiable une étiquette électronique comportant une antenne du type bâtonnet de ferrite placée parallèlement contre ou à proximité de la surface d'un objet dès lors que l'on peut amener le lecteur à proximité de cette surface sensiblement perpendiculaire à celle-ci et donc, en particulier, même lorsque des moyens de protection entourent l'étiquette, comme cela est le cas par exemple pour des bouteilles de gaz qui comportent des tulipes de protection.

L'inventeur a aussi proposé, dans EP-A-0 662 666, une étiquette électronique comportant une feuille en alliage métallique amagnétique et conducteur de l'électricité, la dite antenne s'étendant à proximité directe de la dite feuille, l'axe de bobinage étant parallèle à celle-ci.

En effet, lors de la lecture d'une étiquette comportant une antenne formé par un bobinage enroulé autour d'un bâtonnet de ferrite située parallèlement à la surface de l'objet, le flux magnétique émis par le lecteur passe en partie à côté de l'antenne, en formant un flux de fuite, malgré le pouvoir concentrateur de flux du bâtonnet de ferrite. En fonction de la nature du matériau de l'objet, ce flux de fuite peut être modifié de manière important, perturbant en conséquence le flux passant dans le bâtonnet de ferrite. Ainsi par exemple, si l'objet est en matériau magnétique, par exemple en acier, une partie importante du flux émis va passer dans ce matériau, au détriment de la part de flux traversant la ferrite de l'étiquette. A l'inverse, si le matériau de l'objet est non magnétique, il agit comme un réflecteur pour le champ magnétique, les lignes de champ réfléchies vent perturber le champ émis, à proximité de l'antenne, en risquant même de créer par interférences des noeuds de champ, où celui-ci s'annule. En conséquence, l'énergie reçue par l'étiquette, et le comportement général de celle-ci, sont variables en fonction du matériau constitutif de l'objet, ce qui provoque des variations de conditions de lecture, et notamment de la distance acceptable entre le lecteur et l'étiquette.

L'étiquette définie ci-dessus permet de remédier à ce problème en rendant le comportement de l'étiquette indépendant de la nature du support sur lequel elle est apposée, la feuille du matériau conducteur non magnétique jouant le rôle d'un écran agissant toujours de la même manière quel que soit le matériau sous-jacent.

L'invention a pour but d'améliorer l'étiquette et le système ci-dessus et de permettre une identification plus sûre d'objets pourvus d'étiquettes électroniques, tout en limitant les contraintes de lecture de ces étiquettes.

Avec ces objectifs en vue, l'invention a pour objet une étiquette électronique pour un système d'identification d'objet muni d'une telle étiquette, comportant un module électronique couplé avec une antenne de réception et d'émission d'ondes électromagnétique, la dite antenne comprenant un bobinage ayant un axe et enroulé autour d'un bâtonnet de ferrite allongé dans la direction de cet axe, caractérisée en ce qu'elle comporte une première feuille en matériau conducteur de champ magnétique, à faible champ coercitif, la dite antenne s'étendant à proximité directe de la dite feuille, l'axe du bobinage étant parallèle à celle-ci.

L'étiquette selon l'invention propose donc d'améliorer le pouvoir concentrateur de flux de l'étiquette en disposant une feuille d'un alliage magnétique, de préférence fortement conducteur de champ magnétique, à faible champ coercitif (par exemple de type mumétal) afin de drainer les lignes de champ vers l'étiquette. Cela permet d'augmenter, à distance égale entre le lecteur et l'étiquette, la puissance reçue par l'étiquette, et, à puissance reçue égale, de positionner le lecteur à une distance supérieure. D'autre part, elle améliore l'immunisation au bruit résultant des perturbations introduites par l'environnement de l'étiquette (présence d'un robinet dans une bouteille de gaz par exemple).

L'invention a également pour objet un système pour l'identification d'objets entourés d'une tulipe de protection comprenant d'une part une étiquette électronique muni d'une antenne de réception et d'émission d'ondes électromagnétiques comprenant un bobinage ayant un axe sensiblement parallèle à la surface du récipient à identifier, et d'autre part un lecteur d'étiquettes associé avec un terminal de données et comprenant un dispositif d'émission-réception de ces ondes, comprenant des moyens pour générer un champ magnétique dans un circuit magnétique, le circuit magnétique comprenant deux barreaux espacés l'un de l'autre, ayant des axes sensiblement parallèles, ayant des extrémités respectives situées sensiblement dans un même plan sensiblement perpendiculaire aux dits axes des barreaux, et constituant deux pôles, la distance entre les pôles étant telle que au moins une partie des lignes du dit champ magnétique puisse se boucler dans le circuit magnétique en passant dans le bobinage de l'étiquette selon la direction de l'axe du dit bobinage lorsque le lecteur est placé à proximité de la dite étiquette, caractérisé en ce que le dispositif d'émission-réception comprend des plaques d'un matériau conducteur de champ magnétique, à faible champ coercitif, disposées sensiblement parallèlement aux barreaux, entre ces barreaux et la tulipe de protection.

Ainsi, le système de l'invention propose d'utiliser des plaques en matériau de type mumétal pour former un écran de blindage entre les barreaux et la tulipe de protection. Ces feuilles concentrent les flux de fuite générateurs de perturbations (désaccord des antennes), qui normalement seraient dirigés vers la tulipe, ces flux étant réintroduits dans les barreaux par le biais des feuilles.

Enfin, l'invention a également pour objet un système tel que défini ci-dessus, pour l'identification de récipients fermés par un robinet entouré d'une tulipe de protection, caractérisé en ce que l'étiquette comprend:
- une couche de matériau isolant, placée au fond de la tulipe autour du robinet, parallèlement à la surface du récipient,
- un module électronique associé à une antenne comportant un bobinage enroulé sur un bâtonnet de ferrite, l'antenne étant fixé sur la couche, parallèlement à la surface de ce dernier, et - une première feuille en matériau conducteur de champ magnétique, à faible champ coercitif, s'étendant au dessus de l'antenne, parallèlement à la couche (5).

D'autres caractéristiques et avantages de l'invention apparaîtront dans la description qui va être faite, à titre d'exemple, d'un système d'identification de bouteille de gaz et d'une étiquette pour de telles bouteilles, conformément à l'invention.

On se reportera aux dessins annexés dans lesquels:
- la figure 1 représente schématiquement le lecteur lors de la lecture d'une étiquette apposée sur une bouteille de gaz,
- la figure 2 est une vue de dessus de l'étiquette,
- la figure 3 est une vue en section selon la ligne III-III de la figure 2,
- la figure 4 montre le schéma de principe d'une disposition particulière des bobines du lecteur, dans le cas d'un lecteur comportant deux dispositifs d'émission-réception,
- la figure 5 est un schéma électrique du lecteur dans le cas où il comporte plusieurs dispositifs d'émission-réception commutables.

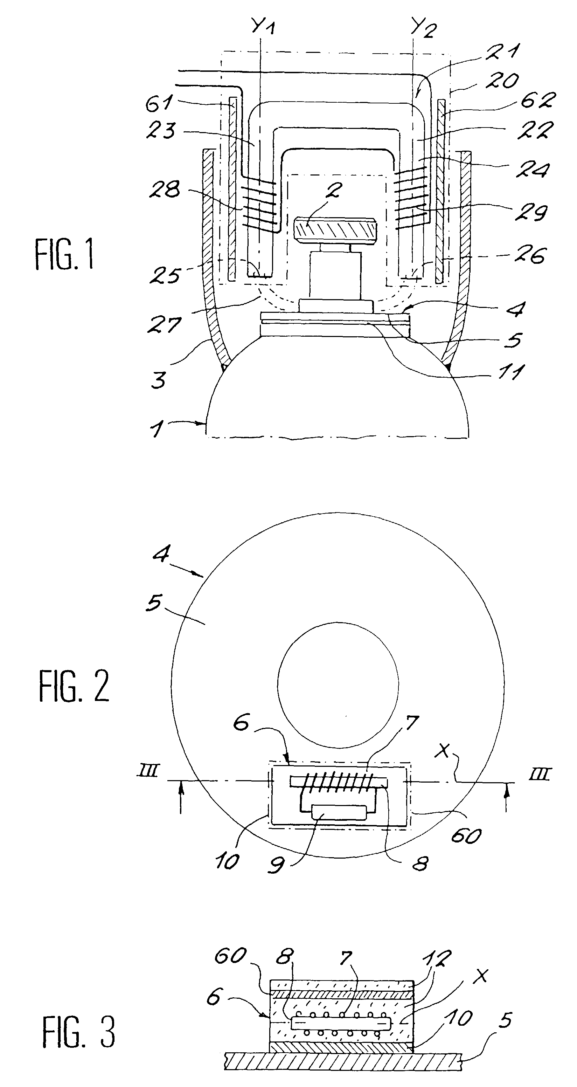

Sur le dessin de la figure 1, on a représenté la partie supérieure d'une bouteille de gaz 1 comportant un robinet 2 et une tulipe de protection 3 entourant le robinet.

Une étiquette électronique 4 est placée au fond de la tulipe, contre la paroi 11 de la bouteille 1.

Comme on le voit mieux aux figures 2 et 3, l'étiquette 4 comprend un empilement de couches successives constituées de :
- un anneau plat 5 en matière plastique fixé sur la bouteille et entourant le raccord du robinet 2,
- une feuille 10 en matériau amagnétique et de faible résistivité électrique,
- une antenne 6 de réception et d'émission d'ondes électromagnétiques formée d'une bobine 7 enroulée autour d'un bâtonnet de ferrite 8 s'étendant selon un axe X, et couplée avec un module électronique 9, tel qu'une puce de circuit intégré, de type connu pour assurer l'identification de l'étiquette. L'antenne s'étend, selon la direction axiale X du bâtonnet, parallèlement à la surface de l'anneau 5 et donc sensiblement parallèlement à la surface de la paroi 11 de la bouteille, et selon une direction tangentielle par rapport au dit anneau.
- une feuille 60 en matériau fortement conducteur de champ magnétique, à faible champ coercitif (ou résiduel). Typiquement, le matériau utilisé sera un alliage de type mumétal. L'ensemble de l'antenne 6 et de la feuille 60, est préférentiellement enveloppé par, ou enrobé dans, un matériau isolant 12, par exemple une matière plastique, pour former une protection de l'antenne et de la feuille 60.

Lors de la lecture d'une étiquette comportant une antenne formé par un bobinage enroulé autour d'un bâtonnet de ferrite située parallèlement à la surface de l'objet, le flux magnétique émis par le lecteur passe en partie à côté de l'antenne, en formant un flux de fuite, malgré le pouvoir concentrateur de flux du bâtonnet de ferrite. En fonction de la nature du matériau de l'objet, ce flux de fuite peut être modifié de manière importante, perturbant en conséquence le flux passant dans le bâtonnet de ferrite. Ainsi par exemple, si l'objet est en matériau magnétique, par exemple en acier, une partie importante du flux émis va passer dans ce matériau, au détriment de la part de flux traversant la ferrite de l'étiquette. A l'inverse, si le matériau de l'objet est non magnétique, il agit comme un réflecteur pour le champ magnétique, les lignes de champ réfléchies venant perturber le champ émis, à proximité de l'antenne, en risquant même de créer par interférences des noeuds de champ, où celui-ci s'annule. En conséquence, l'énergie reçue par l'étiquette, et le comportement général de celle-ci, sont variables en fonction du matériau constitutif de l'objet, ce qui provoque des variations de conditions de lecture, et notamment de la distance acceptable entre le lecteur et l'étiquette.

La feuille 60 s'étend sur l'ensemble de l'étiquette, et préférentiellement au delà des extrémités du bâtonnet de ferrite 8. La présence de cette feuille 60 va se traduire par une déformation du flux magnétique généré par le lecteur dans un sens tendant à augmenter le nombre de lignes de champ traversant l'étiquette, et donc la puissance reçue. D'autre part, cette feuille 60 constitue un écran de blindage entre l'étiquette et le robinet. Il est souhaitable de réduire l'épaisseur de cette feuille le plus possible pour limiter l'encombrement de l'étiquette. Cependant, l'épaisseur devra être au moins égale à l'épaisseur de peau du matériau magnétique à la fréquence considérée afin que l'effet de cette couche soit significatif. L'épaisseur de peau est définie comme l'épaisseur du matériau assurant la conduction électrique à une fréquence donnée.

Le type de matériau utilisé pour réaliser la feuille 60 sera fonction du champ généré par le lecteur. En effet, pour un rendement optimal, le matériau à utiliser ne doit pas se saturer sous l'influence du champ auquel il sera soumis. Il existe au moins une centaine d'alliages de type mumétal, certains se saturant sous l'effet du champ magnétique terrestre, jusqu'à des alliages qu'on peut qualifier d'insaturables, le champ auquel ils doivent être soumis pour se saturer étant très important. Dans le cadre de l'invention, on choisira préférentiellement un matériau insaturable par le champ généré par le lecteur (il s'agit donc d'une insaturation relative).

Pour ce qui concerne les dimensions de la feuille 60, elles dépendront :
- de la fréquence d'accord des antennes, qui détermine l'épaisseur de peau,
- du diamètre de la ferrite, qui déterminera la distance optimale entre l'antenne et la feuille 60, et
- des contraintes d'encombrement.

En pratique, plus la distance entre le mumétal et une antenne est faible et meilleur sera l'effet de blindage (on capte en effet plus de flux de fuite), mais plus on diminuera la puissance transmise (par rebouclage du flux de fuite dans l'antenne).

Dans une réalisation, l'inventeur a utilisé une feuille en mumétal insaturable, aux dimensions de l'étiquette, d'épaisseur 0.1 mm (pour une fréquence d'accord de 125 kiloHertz) et distante de 1.1 mm de l'antenne.

En théorie, la distance optimale entre la feuille de mumétal et l'antenne est égale à trois fois le diamètre de la ferrite. Si on considère une ferrite de 6 mm de diamètre, on comprend bien que cela conduirait à une épaisseur d'étiquette importante (> 24 mm). Par le biais d'essais, l'inventeur a montré qu'une distance supérieure à 1 mm était suffisante.

La feuille 10 est par exemple en cuivre ou alliage de cuivre, et s'étend de même préférentiellement au delà des extrémités du bâtonnet de ferrite 8. Cette feuille a pour rôle de former un écran réflecteur pour les ondes radiofréquences véhiculées par le flux magnétique généré par le lecteur lors de la lecture de l'étiquette ou de l'écriture dans celle-ci. Il est de même souhaitable de réduire cette épaisseur le plus possible pour limiter l'encombrement de l'étiquette. Cependant, l'épaisseur devra être au moins égale à l'épaisseur de peau du matériau amagnétique à la fréquence considérée afin que l'effet de cette couche métallique soit significatif. La feuille 10 pourra être réalisée par une métallisation de l'anneau ou, dans d'autres applications, du support de l'antenne, réalisée par un procédé, de type connu, de dépôt sous vide du dit alliage métallique amagnétique, ou par toute autre technique de dépôt telle qu'un dépôt électrolytique, un dépôt chimique ou par contrecollage d'une feuille métallique.

Sur le dessin de la figure 1, on a également représenté un dispositif 21 d'émission-réception d'ondes électromagnétiques d'un lecteur 20, représenté schématiquement et dont la forme est adaptée pour pénétrer à l'intérieur de la tulipe 3 de protection. Le dispositif d'émission-réception comprend des moyens pour générer un champ magnétique dans un circuit magnétique, formé d'une pièce 22 en matériau magnétique, par exemple en forme de U, comportant deux barreaux formant les branches 23, 24 du "U" dont les extrémités forment deux pôles 25, 26 ayant des directions axiales Y1, Y2 sensiblement parallèles et situés dans un même plan sensiblement perpendiculaire aux dites directions axiales.

Les deux pôles 25, 26 sont espacés d'une distance telle que les lignes 27 du champ magnétique passant dans le circuit magnétique bouclent en passant dans le bâtonnet de ferrite 8 lorsque le lecteur est approché de l'étiquette. Le bâtonnet de ferrite va ainsi participer à la fermeture du circuit magnétique, et en ayant un effet de concentration des lignes de champ, optimiser le flux traversant la bobine 7 de l'étiquette.

Les dits moyens de génération du champ magnétique sont préférentiellement constitués de deux bobines 28, 29, enroulées autour des branches 23, 24 et dans un sens adapté pour que le flux tourne dans le circuit magnétique, c'est-à-dire tel que le champ généré par chacune des bobines dans les branches respectives soit de sens contraire.

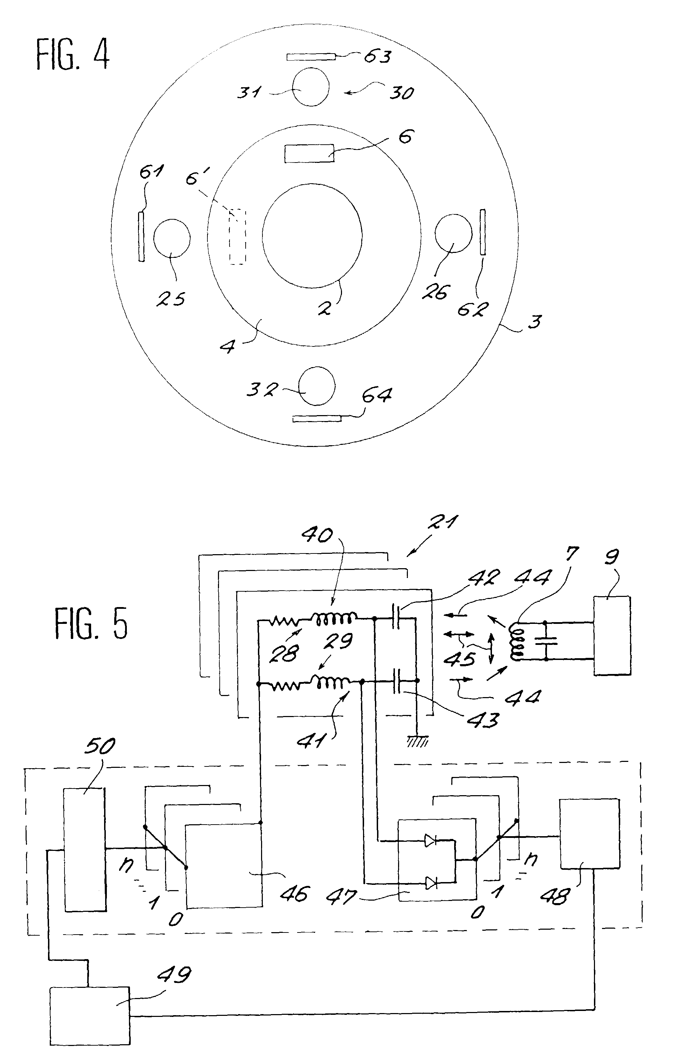

Le lecteur comporte par ailleurs deux plaques 61 et 62 de matériau fortement conducteur de champ magnétique, à faible champ coercitif, disposés à proximité des branches 22 et 23. En pratique, le matériau utilisé pour les plaques 61 et 62 sera identique au matériau utilisé pour la feuille 60, ces plaques et la feuille étant soumises au même champ magnétique. Ces plaques sont sensiblement parallèles aux dits barreaux, et interposées respectivement entre un des barreaux et la tulipe 3 de protection. Elles forment ainsi un écran de blindage entre les antennes et la tulipe de protection. De préférence, ces plaques s'étendent au delà des extrémités des barreaux (voir figure 1), et s'étendent sur une largeur plus importante que le diamètre des barreaux (voir figure 4). Par exemple, en considérant des barreaux de 6 mm de diamètre et de 30 mm de hauteur, on utilisera des plaques de 11 mm de largeur sur 35 mm de hauteur. On améliore ainsi la maîtrise des fuites sur les bords des barreaux. En ce qui concerne l'épaisseur des plaques et la distance plaque-barreau, elles sont soumises aux mêmes contraintes que pour la feuille de l'étiquette. En pratique, on pourra définir une distance plaque-barreau plus importante, les contraintes d'encombrement étant moins critiques pour le lecteur que pour l'étiquette.

Lors de la lecture d'une étiquette, en plaçant le lecteur à proximité de celle-ci, les lignes de champs tendent à être canalisées pour le bâtonnet de ferrite 8. Cependant, une partie de ces lignes se disperse et il existe donc un flux de fuite qui est perdu, ce phénomène pouvant être d'autant plus accentué, avec le lecteur selon l'invention, que la disposition des pôles tend à provoquer un épanouissement des lignes de champ entre ceux-ci.

Dans chaque plaque 61 et 62, il va se créer un champ sous l'influence du champ généré par les pôles. Le champ crée dans chaque plaque sera de sens opposé au champ créé dans le barreau auprès duquel elle est située. De cette façon, pour chaque barreau, le flux de fuite en direction de la tulipe de protection aura tendance à être canalisé dans la plaque attenante à ce barreau et réintroduit dans celui-ci.

La densité de ce flux de fuite est variable d'une part en fonction de la position relative du lecteur et de l'étiquette, et d'autre part de la nature des matériaux avoisinants. Ainsi par exemple, à proximité d'une masse métallique magnétique telle que celle d'une bouteille en acier, le flux de fuite drainé à travers cette masse et consommé par la magnétisation de celle-ci, sera important et réduira d'autant le flux utile traversant la bobine du récepteur. Par contre, si la masse métallique est amagnétique, par exemple une bouteille en aluminium, le champ magnétique est réfléchi.

C'est pourquoi l'étiquette selon l'invention comporte la feuille 60 de matériau fortement magnétique qui d'une part fait écran de blindage entre l'étiquette et le robinet, et d'autre part permet de canaliser les lignes de champ vers l'étiquette.

La feuille 10 de métal conducteur non magnétique fait écran et réfléchit le champ, et homogénéise donc les conditions d'émission et de réception quel que soit la nature du matériau de l'objet sur lequel l'étiquette est apposée.

Dans un dispositif précédent, comprenant uniquement la feuille 10, l'inventeur a constaté que la fréquence d'accord du circuit résonant formant l'antenne, constitué du bobinage 7 et d'une capacité d'accord, en approchant l'antenne d'une surface en matériau amagnétique, pouvait varier d'un facteur notablement inférieur à 10 %, alors qu'en l'absence de la feuille 10, cette variation était supérieure à 10 %.

Avec l'étiquette selon l'invention, comportant de plus la feuille 60, l'inventeur a constaté que dans de telles conditions, la variation était seulement de 1 %.

Si le lecteur ne comporte qu'un seul dispositif d'émission-réception, il se peut que, lors de la lecture, l'orientation relative des pôles 25, 26 et de l'antenne 6 de l'étiquette soit telle que le flux traversant la bobine 7 de l'étiquette soit insuffisant, par exemple lorsque, comme représenté en pointillé 6' à la figure 4, la direction axiale X de la dite antenne est perpendiculaire au plan contenant les dits pôles. Il serait alors nécessaire de changer cette orientation pour permettre la lecture.

Avantageusement, pour éviter ce problème, le lecteur comporte un deuxième dispositif d'émission-réception 30, constitué comme celui 21 représenté sur la figure 1, et décalé angulairement par rapport au premier autour de l'axe médian A des pôles, de manière que le plan des pôles 31, 32 du deuxième dispositif soit, par exemple et non limitativement, perpendiculaire à celui du premier. Bien entendu, on disposera alors deux plaques 63 et 64 supplémentaires de mumétal afin de réaliser un blindage du deuxième dispositif d'émission-réception 30 par rapport à la tulipe 3 de protection. Ainsi, quelle que soit la position relative du lecteur et de l'antenne, la lecture peut être effectuée, par au moins l'un des dispositifs.

Cette disposition présente l'avantage que les deux bobines étant bobinées de manière à créer un flux magnétique de l'une vers l'autre en passant par la bobine de l'étiquette, la puissance transmise et la sensibilité de réception sont pratiquement doublées.

Il devient ainsi possible de lire l'étiquette de manière sûre, quelle que soit son orientation. En effet, si, lors de la lecture, l'antenne de l'étiquette se trouve par hasard orientée perpendiculairement à la direction définie par les deux pôles d'un de ces dispositifs, ce qui empêcherait la transmission du flux à travers le bobinage, cette transmission pourra cependant être réalisée par un autre de ces dispositifs, puisque celui-ci, décalé angulairement, pourra transmettre au moins partiellement le flux à travers le dit bobinage de l'étiquette.

On comprendra aisément que la lecture pourra être encore plus sûre en toute position en utilisant plus de deux dispositifs d'émission-réception, répartis selon différentes positions de manière à couvrir les différentes orientations que peut prendre l'antenne de l'étiquette.

Le dessin de la figure 5 montre un schéma bloc simplifié du lecteur comportant une telle pluralité de dispositifs d'émission-réception et des moyens de sélection automatique, parmi ces dispositifs, de celui permettant une lecture fiable de l'étiquette.

Sur ce schéma, on a représenté plusieurs dispositifs d'émission-réception 21, repérés de 0,1.... n, chacun comportant deux circuits résonnants 40, 41 montés en parallèle, et comportant respectivement les bobines 28, 29 associées avec des condensateurs 42, 43. Les flèches en gras 44 représentent symboliquement la transmission de l'énergie nécessaire au fonctionnement de l'étiquette électronique ; les flèches doubles 45 représentent de même les échanges de données entre le lecteur et l'étiquette, par modulation des ondes électromagnétiques transmises.

Chaque dispositif 21 d'émission-réception est relié à un étage de puissance et de modulation 46 et à un étage de démodulation 47. Les sorties des étages de démodulation 47 sont reliées ensemble à des filtres 48, d'où les signaux correspondants aux données lues sont transmis à un terminal de données 49.

Les entrées des étages de puissance et de modulation 44 sont reliées à un sélecteur 50 qui les alimente sélectivement, lui-même relié au terminal 49. Lorsque, au cours d'une lecture, les données transmises au terminal et provenant des signaux captés par l'un des dispositifs 21, ne sont pas valides, notamment parce que l'antenne de l'étiquette ne se trouve pas correctement orientée par rapport au dit dispositif 21, le terminal envoie une impulsion au sélecteur 50 qui commute alors pour alimenter un autre étage de puissance et de modulation et donc mettre en service un autre dispositif d'émission-réception. Ces opérations se renouvellent jusqu'à ce que la lecture de l'étiquette soit validée.

L'invention n'est pas limitée aux dispositions décrites ci-dessus uniquement à titre d'exemple. En particulier, l'étiquette peut être réalisée sous une forme différente de la forme annulaire précédemment décrite et comporter à la place de l'anneau 5 une simple plaque, par exemple en matière plastique, formant une couche de matériau isolant placée contre la feuille en matériau conducteur amagnétique, de son côté opposé à l'antenne. Cette plaque sert de support pour l'antenne et le module électronique. Cette plaque peut en particulier, tout en conservant une forme générale annulaire, être discontinue, par exemple en forme de "C", ce qui peut faciliter sa mise en place sur la bouteille autour du robinet. Elle peut aussi présenter toute autre forme adaptée à l'objet sur lequel l'étiquette doit être apposée. L'étiquette peut être apposée sur tout objet, la dite plaque permettant de plus d'isoler électriquement la feuille de matériau conducteur amagnétique du dit objet, notamment lorsque celui-ci est métallique.

## Revendications

1. Etiquette électronique pour un système d'identification d'objet muni d'une telle étiquette, comportant un module électronique (9) couplé avec une antenne (6) de réception et d'émission d'ondes électromagnétiques, la dite antenne comprenant un bobinage (7) ayant un axe (X) et enroulé autour d'un bâtonnet (8) de ferrite allongé dans la direction de cet axe, caractérisée en ce qu'elle comporte une première feuille (60) en matériau conducteur de champ magnétique, à faible champ coercitif, la dite antenne s'étendant à proximité directe de la dite feuille, l'axe du bobinage, étant parallèle à celle-ci.

2. Etiquette selon la revendication 1, caractérisé en ce qu'elle comporte une deuxième feuille (10) en alliage métallique amagnétique et conducteur de l'électricité, disposée de manière à s'étendre parallèlement à la surface de l'objet à identifier entre celle-ci et l'antenne, la dite antenne s'étendant à proximité directe de la dite deuxième feuille, l'axe du bobinage étant parallèle à celle-ci, et la dite deuxième feuille étant séparée de la première feuille par le bobinage.

3. Etiquette selon la revendication 2, caractérisée en ce qu'elle comporte une couche (5) de matériau isolant, placée contre la dite deuxième feuille (10), sur sa face opposée à l'antenne.

4. Système pour l'identification d'objets entourés d'une tulipe de protection comprenant d'une part une étiquette électronique (4) muni d'une antenne (6) de réception et d'émission d'ondes électromagnétiques comprenant un bobinage (7) ayant un axe (X) sensiblement parallèle à la surface du récipient à identifier, et d'autre part un lecteur (20) d'étiquettes associé avec un terminal (49) de données et comprenant un dispositif (21) d'émission-réception de ces ondes, comprenant des moyens (28, 29) pour générer un champ magnétique dans un circuit magnétique (22), le circuit magnétique comprenant deux barreaux (23, 24) espacés l'un de l'autre, ayant des axes (Y1, Y2) sensiblement parallèles, ayant des extrémités respectives (25, 26) situées sensiblement dans un même plan sensiblement perpendiculaire aux dits axes des barreaux, et constituant deux pôles, la distance entre les pôles étant telle que au moins une partie des lignes (27) du dit champ magnétique puisse se boucler dans le circuit magnétique en passant dans le bobinage (7) de l'étiquette selon la direction de l'axe (X) du dit bobinage lorsque le lecteur est placé à proximité de la dite étiquette,
caractérisée en ce que le dispositif d'émission-réception comprend des plaques (61, 62) d'un matériau conducteur de champ magnétique, à faible champ coercitif, disposées sensiblement parallèlement aux barreaux, entre ces barreaux et la tulipe de protection.

5. Système selon la revendication 4, caractérisé en ce que le matériau formant les plaques soit insaturable par le champ magnétique produit dans le circuit magnétique.

6. Système selon la revendication 4, caractérisé en ce que les moyens pour générer le champ magnétique comprennent deux bobines (28, 29) enroulées respectivement sur les deux barreaux dans une configuration telle que le champ généré soit de sens opposé dans les deux barreaux.

7. Système selon l'une des revendication 4 à 6, caractérisé en ce que le lecteur (20) comporte plusieurs dispositifs (21, 30) d'émission-réception, décalés angulairement autour d'un axe médian (A), et des moyens (50) de sélection automatique pour commuter automatiquement l'alimentation d'un premier (21) quelconque de ces dispositifs vers un deuxième (30) quelconque de ces dispositifs lorsque les données reçues par le terminal (49) en provenance du dit premier dispositif sont considérés non valides.

8. Système selon l'une des revendication 4 à 7, pour l'identification de récipients (1) fermés par un robinet (2) entouré d'une tulipe (3) de protection,
caractérisé en ce que l'étiquette (4) comprend
- une couche (5) de matériau isolant, placée au fond de la tulipe autour du robinet, parallèlement à la surface du récipient,
- un module électronique (9) associé à une antenne (6) comportant un bobinage (7) enroulé sur un bâtonnet (8) de ferrite, l'antenne (6) étant fixée sur la couche (5) de matériau isolant, parallèlement à la surface de ce dernier, et
- une première feuille (60) en matériau conducteur de champ magnétique, à faible champ coercitif, s'étendant au dessus de l'antenne, parallèlement à la couche (5) de matériau isolant.

9. Système selon la revendication 8, caractérisé en ce que l'étiquette (4) comprend une deuxième feuille (10) en alliage métallique amagnétique et conducteur de l'électricité, sensiblement parallèle à la couche (5) de matériau isolant entre celle-ci et l'antenne, l'antenne (6) s'étendant à proximité directe de la dite deuxième feuille, le bobinage (7) ayant un axe (X) parallèle à celle-ci, et la dite deuxième feuille étant séparée de la première feuille (60) par le bobinage (7).

## Patentansprüche

1. Elektronisches Etikett für ein System zur Identifizierung eines Objekts, das mit einem solchen Etikett ausgestattet ist, das ein Elektronikmodul (9) umfaßt, welches mit einer Antenne (6) zum Empfang und zum Senden elektromagnetischer Wellen gekoppelt ist, wobei die Antenne eine Spule (7) mit einer Achse (X) aufweist, die um einen Stab (8) aus Ferrit gewickelt ist, der in Richtung der Achse verlängert ist,
dadurch **gekennzeichnet,** daß
es ein erstes Blatt (60) aus einem Material aufweist, das für magnetische Felder einen Leiter mit kleinem Koerzitiv-Feld darstellt, wobei sich die Antenne in unmittelbarer Nachbarschaft zu dem Blatt befindet, wobei die Achse der Spule parallel zu diesem verläuft.

2. Etikett nach Anspruch 1,
dadurch gekennzeichnet, daß
es ein zweites Blatt (10) aus einer metallischen, nichtmagnetischen Legierung, die ein elektrischer Leiter ist, aufweist, das derart angeordnet ist, daß es sich parallel zur Oberfläche des zu identifizierenden Objekts zwischen dieser und der Antenne erstreckt, wobei die Antenne sich in unmittelbarer Nähe zu diesem zweiten Blatt befindet, wobei die Achse der Spule parallel zu diesem verläuft und dieses zweite Blatt von dem ersten Blatt durch die Spule getrennt wird.

3. Etikett nach Anspruch 2,
dadurch gekennzeichnet, daß
es eine Schicht (5) aus Isoliermaterial umfaßt, die an dem zweiten Blatt (10) auf der Seite gegenüber der Antenne anliegt.

4. System zur Identifizierung von Objekten, die von einer Schutzglocke umgeben sind, das einerseits ein elektronisches Etikett (4) mit einer Antenne (6) zum Empfang und zum Senden elektromagnetischer Wellen mit einer Spule (7) mit einer Achse (X) im wesentlichen parallel zur Oberfläche des zu identifizierenden Behälters und andererseis ein Lesegerät (20) für dazugehörige Etiketten mit einem Datenanschluß (49) umfaßt und eine SendeEmpfangs-Einrichtung (21) für diese Wellen mit Vorrichtungen (28, 29) zum Erzeugen eines Magnetfeldes in einem magnetischen Kreis (22) umfaßt, wobei der Magnetkreis zwei Streben (23, 24), die mit im wesentlichen parallelen Achsen (Y1, Y2) voneinander beabstandet sind, deren jeweilige Enden (25, 26) sich in derselben Ebene befinden, welche im wesentlichen senkrecht zu den Achsen der Streben verläuft, und die zwei Pole bilden, umfaßt, wobei der Abstand zwischen den Polen derart ist, daß wenigstens teilweise die Magnetfeldlinien (27) sich in dem Magnetkreis schließen können, indem sie durch die Spule (7) des Etiketts in Richtung der Achse (X) der Spule verlaufen, wenn das Lesegerät in der Nähe des Etiketts angeordnet wird,
dadurch gekennzeichnet, daß
die Sende-Empfangs-Einrichtung Platten (61, 62) aus einem das Magnetfeld leitenden Material mit schwachem Koerzitiv-Feld umfaßt, die im wesentlichen parallel zu den Stäben zwischen den Stäben und der Schutzglocke angeordnet sind.

5. System nach Anspruch 4,
dadurch gekennzeichnet, daß
das die Platten bildende Material durch das in dem Magnetkreis erzeugte magnetische Feld nicht sättigbar ist.

6. System nach Anspruch 4,
dadurch gekennzeichnet, daß
die Vorrichtungen zum Erzeugen des Magnetfeldes zwei Spulen (28, 29), die jeweils auf die zwei Streben gewikkelt sind, in der Anordnung umfassen, so daß das erzeugte Feld entgegengesetzte Richtung in den zwei Streben hat.

7. System nach einem der Ansprüche 4 bis 6,
dadurch gekennzeichnet, daß
das Lesegerät (20) mehrere Sende-Empfangs-Einrichtungen (21, 30), die in bezug auf den Winkel um eine Mittelachse (A) versetzt sind, und Vorrichtungen (50) zur automatischen Auswahl umfaßt, um automatisch die Versorgung von einer ersten (21) der Einrichtungen aus eine zweite (30) der Einrichtungen umzuschalten, wenn die durch den Anschluß (49) von der ersten Einrichtung empfangenen Daten nicht akzeptiert werden.

8. System nach einem der Ansprüche 4 bis 7 zur Identifizierung von Behältern (1), die durch einen Hahn (2), der mit einer Schutzglocke (3) umgeben ist, verschlossen werden,
dadurch gekennzeichnet', daß das Etikett (4) umfaßt: eine Schicht (5) aus Isoliermaterial, das sich am Grund der Glocke um den Hahn herum parallel zur Oberfläche des Behälters befindet,
ein Elektronikmodul (9) mit einer dazugehörigen Antenne (6) mit einer Spule (7), die auf einen Ferritstab (8) gewickelt ist, wobei die Antenne (6) auf der Schicht (5) aus Isoliermaterial parallel zur Oberfläche der letzteren befestigt ist, und
sich ein erstes Blatt (60) aus das Magnetfeld leitendem Material mit schwachem Koerzitiv-Feld oberhalb der Antenne parallel zu der Schicht (5) aus Isoliermaterial erstreckt.

9. System nach Anspruch 8,
dadurch gekennzeichnet, daß das Etikett (4) ein zweites Blatt (10) aus metallischer, nichtmagnetischer Legierung aufweist, die ein elektrischer Leiter ist, das sich im wesentlichen parallel zu der Schicht (5) aus Isoliermaterial zwischen dieser und der Antenne erstreckt, wobei sich die Antenne (6) in unmittelbarer Nähe des zweiten Blattes erstreckt, wobei die Spule (7) eine Achse (X) parallel zu diesem hat und das zweite Blatt von dem ersten Blatt (60) durch die Spule (7) getrennt wird.

## Claims

1. Electronic label for an object identification system equipped with such a label, having an electronic module (9) coupled with an antenna (6) for receiving and transmitting electromagnetic waves, the said antenna comprising a winding (7) having an axis (X) and wound around a ferrite rod (8) extending in the direction of this axis, characterised in that it has a first sheet (60) made from a material capable of conducting a magnetic field, of low coercivity, the said antenna extending in direct proximity to the said sheet, the axis of the winding being parallel thereto.

2. Label according to Claim 1, characterised in that it has a second sheet (10) made from a non-magnetic and electrically conductive metal alloy, disposed so as to extend in parallel to the surface of the object to be identified, between the said surface and the antenna, the said antenna extending in direct proximity to the said second sheet, the axis of the winding being parallel thereto, and the said second sheet being separated from the first sheet by the winding.

3. Label according to Claim 2, characterised in that it has a layer (5) of isolating material, placed against the said second sheet (10), on its face opposite the antenna.

4. System for the identification of objects surrounded by a protective bell comprising on the one hand an electronic label (4) equipped with an antenna (6) for receiving and transmitting electromagnetic waves comprising a winding (7) having an axis (X) substantially parallel to the surface of the receptacle to be identified, and on the other hand a label reader (20) associated with a data terminal (49) and comprising a device (21) for transmitting and receiving these waves, comprising means (28, 29) for generating a magnetic field in a magnetic circuit (22), the magnetic circuit comprising two bars (23, 24) spaced apart from one another, having substantially parallel axes (Y1, Y2), having respective ends (25, 26) situated substantially in one and the same plane substantially perpendicular to the said axes of the bars, and forming two poles, the distance between the poles being such that at least some of the lines (27) of the said magnetic field can form loops in the magnetic circuit by passing through the winding (7) of the label in the direction of the axis (X) of the said winding when the reader is placed in proximity to the said label,
characterised in that the transceiver device comprises plates (61, 62) of a material capable of conducting a magnetic field, of low coercivity, disposed substantially parallel to the bars, between these bars and the protective bell.

5. System according to Claim 4, characterised in that the material forming the plates cannot be saturated by the magnetic field produced in the magnetic circuit.

6. System according to Claim 4, characterised in that the means for generating the magnetic field comprise two coils (28, 29) wound respectively on the two bars in a configuration such that the field generated is in the opposite direction in the two bars.

7. System according to one of Claims 4 to 6, characterised in that the reader (20) has several transceiver devices (21, 30), angularly offset about a median axis (A), and automatic selection means (50) for automatically switching the power supply from any first one (21) of these devices to any second one (30) of these devices when the data received by the terminal (49) originating from the said first device are considered to be invalid.

8. System according to one of Claims 4 to 7, for the identification of receptacles (1) closed by a valve (2) surrounded by a protective bell (3),
characterised in that the label (4) comprises
- a layer (5) of isolating material, placed at the base of the bell surrounding the valve, parallel to the surface of the receptacle,
- an electronic module (9) associated with an antenna (6) having a winding (7) wound on a ferrite rod (8), the antenna (6) being fixed to the layer (5) of isolating material, parallel to the surface thereof, and
- a first sheet (60) of material capable of conducting a magnetic field, of low coercivity, extending above the antenna, parallel to the layer (5) of isolating material.

9. System according to Claim 8, characterised in that the label (4) comprises a second sheet (10) of a non-magnetic and electrically conductive metal alloy, substantially parallel to the layer (5) of isolating material, between the latter and the antenna, the antenna (6) extending in direct proximity to the said second sheet, the winding (7) having an axis (X) parallel thereto, and the said second sheet being separated from the first sheet (6) by the winding (7).
